# EUROPEAN PATENT APPLICATION

(11) **EP 1 847 893 A2**
(43) Date of publication of application: **24.10.2007**
(21) Application number: 07007835.7
(22) Date of filing: 17.04.2007
(51) Int. Cl.: G05B 19/4062

(54) **Device and method for controlling electric motor**

(30) Priority: 17.04.2006 JP 2006113728
(71) Applicant: Fanuc Ltd, Minamitsuru-gun, Yamanashi 401-0597 (JP)
(72) Inventor: Kinoshita, Satoshi, Minamitsuru-gun Yamanashi 401-0511 (JP); Yasumura, Mitsuhiro, Minamitsuru-gun Yamanashi 401-0302 (JP)
(74) Representative: Schmidt, Steffen J.

(57) **Abstract**

A control device including an operation monitoring section for monitoring the operating state of an electric motor, and an operation control section for controlling the operation of the electric motor in accordance with a monitored result of the operation monitoring section. The operation monitoring section includes a data obtaining section for obtaining operational data of the electric motor; a threshold determining section for selecting and determining an applicable threshold actually comparable with the operational data, from among mutually different first and second thresholds provided for comparison with the operational data, in a manner as to comply with a given condition in connection with a temperature of the electric motor; and an abnormal-operation judging section for comparing the operational data obtained in the data obtaining section with the applicable threshold determined in the threshold determining section, and judging whether there is an abnormality in the operation of the electric motor. The operation control section is configured to control the operation of the electric motor in accordance with a judged result of the abnormal-operation judging section.

## Description

### BACKGROUND OF THE INVENTION

### 1. Field of the Invention

The present invention relates to control of an electric motor. In particular, the present invention relates to a device and a method for controlling an electric motor used as a driving source of a moving part, in an automatic control system for a movable structure such as a robot, a machine tool or the like.

### 2. Description of the Related Art

In a movable structure such as a robot, a machine tool or the like, which uses an electric motor as a driving source, when an abnormal load is applied to the electric motor as a result of the collision of a moving part, such as a robot arm, a tool or the like, with an obstacle or the failure of a reduction gear mechanism of the electric motor, it is important to immediately detect the abnormal load and take certain measures to cope with the situation, such as halting or reversing the electric motor, so as to prevent mechanical components of the movable structure from breaking, along with the electric motor and the obstacle, as well as to prevent the other secondary accidents. Conventionally, it is a common technique for detecting abnormal operation of an electric motor that position or velocity error-deviation data in a feedback control, or actually measured driving-current data, obtained during the operation of the electric motor (these data are hereinafter referred generally to as "operational data"), is compared with a predetermined threshold previously provided in connection with the respective data, and that, at the instant the operational data exceeds the threshold, it is judged that the abnormal operation occurs.

It is also known that a disturbance torque estimated from a torque command value and an actually measured velocity value, of the electric motor, is used as the above-described operational data to detect the abnormal operation of the electric motor. For example, Japanese Patent No. 2665984 (JP-B-2665984) discloses a method for detecting a collision, in which a disturbance estimation observer, for estimating disturbance torque based on the torque command value and the actually measured velocity value of the electric motor, is incorporated into a control system, and when the estimated disturbance torque is not less than a set value, it is determined that an object to be driven by the electric motor (i.e., a moving part of the movable structure) collides with a foreign object. Further, in addition to the above configuration, it is known that, as disclosed in Japanese Patent No. 2749724 (JP-B-2749724), a previously known disturbance torque resulted from friction, gravity, arm interference, etc., is determined on the basis of the measured velocity value of the electric motor; the orientation of the robot arm, etc., and that the collision of the driven object is detected on the basis of a differential disturbance torque obtained by subtracting the known disturbance torque from the estimated disturbance torque.

In the above method in which the collision of the driven object is detected based on the estimated disturbance torque, the real-time torque variation of the electric motor due to the collision is estimated as the disturbance torque, and therefore, it is possible to quickly and reliably detect a collision. Moreover, when a disturbance torque threshold, as a reference for the determination of a collision, is set while taking into consideration, e.g., the structural strength of the driven object, it is possible to prevent the driven object from breaking. However, during the operation of the electric motor, the viscosity of a lubricating oil supplied to the movable areas of the electric motor and the driven object changes, and friction loss between the movable elements thus varies, under the influence of ambient temperature or the temperature of the electric motor, so that estimated disturbance torque may be significantly affected by the variation of friction loss. More specifically, in a low temperature environment, the viscosity of lubricating oil increases and the measured velocity value thus is lowered compared with the torque command value, and therefore, estimated disturbance torque tends to increase. In this case, if the disturbance torque threshold is set relatively low, the estimated disturbance torque may exceed the threshold under the influence of temperature, even though a collision does not occur, and as a result, measures to cope with the situation, such as halting the electric motor may be needlessly taken. Therefore, as conventional practice, the threshold is set relatively higher than a required value for safety, so as to prevent a false detection from being caused under the influence of temperature. However, this practice may result in the deterioration of safety in an automatic control system.

Also, in a configuration wherein the operational data obtained during the operation of the electric motor, such as position deviation, velocity deviation, driving current, etc., is used for detecting the abnormal operation of the electric motor, the change of the viscosity of the lubricating oil or a variation in friction loss between movable elements, under the influence of the temperature, may significantly affect the operational data. Therefore, also in this configuration, the threshold is usually set relatively higher than a required value for safety, so as to prevent a false detection due to temperature, which may also result in a deterioration of safety in an automatic control system.

### SUMMARY OF THE INVENTION

It is an object of the present invention to provide a control device for an electric motor used as a driving source of a moving part of a movable structure such as a robot, a machine tool or the like, which is capable of quickly and accurately detecting an abnormal operation of the electric motor as a result of a collision of a moving part, failure of a reduction gear mechanism, etc., without being affected by ambient temperature or the temperature of the electric motor, and allowing certain measures to cope with the situation, such as halting or reversing the operation of the electric motor, taken immediately, so as to ensure safety in an automatic control system.

It is another object of the present invention to provide a control method for an electric motor used as a driving source of a moving part of a movable structure such as a robot, a machine tool or the like, which is capable of quickly and accurately detecting an abnormal operation of the electric motor as a result of a collision of a moving part, failure of a reduction gear mechanism, etc., without being affected by ambient temperature or the temperature of the electric motor, and allowing certain measures to cope with the situation, such as halting or reversing the operation of the electric motor, taken immediately, so as to ensure safety in an automatic control system.

To accomplish the above object, the present invention provides a device for controlling an electric motor, comprising an operation monitoring section for monitoring the operating state of an electric motor; and an operation control section for controlling an operation of the electric motor in accordance with a monitored result of the operation monitoring section; the operation monitoring section comprising a data obtaining section for obtaining operational data of the electric motor; a threshold determining section for selecting and determining an applicable threshold actually comparable with the operational data, from among mutually different first and second thresholds provided for comparison with the operational data, in a manner as to comply with a given condition in connection with a temperature of the electric motor; and an abnormal-operation judging section for comparing the operational data obtained in the data obtaining section with the applicable threshold determined in the threshold determining section, and judging whether an abnormality arises in the operation of the electric motor; the operation control section being configured to control the operation of the electric motor in accordance with a judged result of the abnormal-operation judging section.

According to the device for controlling, configured as described above, when an abnormal load is applied to the electric motor as the result of a collision of the driven object of the electric motor with an obstacle or the failure of the reduction gear mechanism of the electric motor, the abnormal-operation judging section of the operation monitoring section compares real-time operational data of the electric motor with the applicable threshold and determines whether there is an abnormality in the operation of the electric motor, so as to immediately detect the occurrence of an abnormal operation. Then, in accordance with the judged result of the abnormal-operation judging section, the operation control section allows, when an abnormal operation is detected, the electric motor to immediately perform an operation as measures to cope with the situation, such as halting or reversing the operation of the electric motor.

In particular, in the present invention, the threshold determining section is configured to select and determine the applicable threshold from among the first and second thresholds based on the condition in connection with the temperature of the electric motor, so that it is possible to take the fact that the viscosity of a lubricating oil changes due to the influence of the temperature of the electric motor into consideration during the operation of the electric motor, and thus to selectively use either one of the thresholds suiting the temperature of the electric motor, in such a manner that, for example, the first threshold is used as the applicable threshold for abnormal operation if the temperature-related condition is not satisfied, while the second threshold is used as the applicable threshold for abnormal operation if the temperature-related condition is satisfied. As a result, it is possible to quickly and accurately detect the abnormal operation of the electric motor as a result of a collision of the driven object, the failure of the reduction gear mechanism or the like, without being affected by ambient temperature or the temperature of the electric motor (in particular, without causing a false detection due to increased viscosity of lubricating oil), and to allow certain measures to cope with the situation, such as halting or reversing the operation of the electric motor, taken immediately, so as to ensure safety in an automatic control system.

In the above configuration, the operation monitoring section may further comprise a temperature detecting section for detecting the actual temperature of the electric motor. In this arrangement, the threshold determining section may be configured to compare the actual temperature detected in the temperature detecting section with a reference temperature of the electric motor given as the condition to the threshold determining section, determine a lower one of the first and second thresholds as the applicable threshold in a case where the actual temperature is higher than the reference temperature, and determine a higher one of the first and second thresholds as the applicable threshold in a case where the actual temperature is lower than the reference temperature.

Also, the operation monitoring section may further comprise a time registering section for measuring the actual resting time of the electric motor. In this arrangement, the threshold determining section may be configured to compare the actual resting time last measured in the time registering section with the reference resting time of the electric motor given as the condition to the threshold determining section, and determine a lower one of the first and second thresholds as the applicable threshold in a case where the actual resting time is shorter than the reference resting time.

In the above configuration, the time registering section may also be configured to further measure the actual operating time of the electric motor. In this arrangement, the threshold determining section may be configured to compare the actual operating time last measured in the time registering section with a reference operating time of the electric motor given as the condition in a case where the actual resting time is longer than the reference resting time, determine a lower one of the first and second thresholds as the applicable threshold in a case where the actual operating time is longer than the reference operating time, and determine the a higher one of the first and second thresholds as the applicable threshold in a case where the actual operating time is shorter than the reference operating time.

The threshold determining section may be configured to select and determine the applicable threshold from among three or more mutually different thresholds provided for comparison with the operational data, so as to comply with the condition.

The operational data obtained in the data obtaining section may be selected from a group including position deviation, velocity deviation, driving current and estimated disturbance torque, obtained during the operation of the electric motor.

The present invention further provides a method for monitoring the operating state of an electric motor and controlling the operation of the electric motor in accordance with the operating state as monitored, characterized in that the method comprises the steps of obtaining operational data of the electric motor; providing mutually different first and second thresholds for comparison with the operational data; setting a condition in connection with a temperature of the electric motor, the condition being used for selecting an applicable threshold actually comparable with the operational data, from among the first and second thresholds; selecting and determining the applicable threshold from among the first and second thresholds in a manner as to comply with the condition; comparing the operational data with the applicable threshold and judging whether an abnormality arises in the operation of the electric motor; and controlling the operation of the electric motor in accordance with a judged result relating to an abnormal operation of the electric motor.

### BRIEF DESCRIPTION OF THE DRAWINGS

The above and other objects, features and advantages of the present invention will become more apparent from the following description of preferred embodiments in connection with the accompanying drawings, wherein:
Fig. 1 is a functional block diagram showing a basic configuration of a control device according to the present invention;
Fig. 2 is a flow chart showing a control method according to the present invention;
Fig. 3 is a functional block diagram showing a configuration of a control device according to a first embodiment of the present invention;
Fig. 4 is a flow chart showing a control method according to a first embodiment of the present invention;
Fig. 5 is a functional block diagram showing a configuration of a control device according to a second embodiment of the present invention; and
Fig. 6 is a flow chart showing a control method according to a second embodiment of the present invention.

### DETAILED DESCRIPTION

The embodiments of the present invention are described below, in detail, with reference to the accompanying drawings. In the drawings, the same or similar components are denoted by common reference numerals.

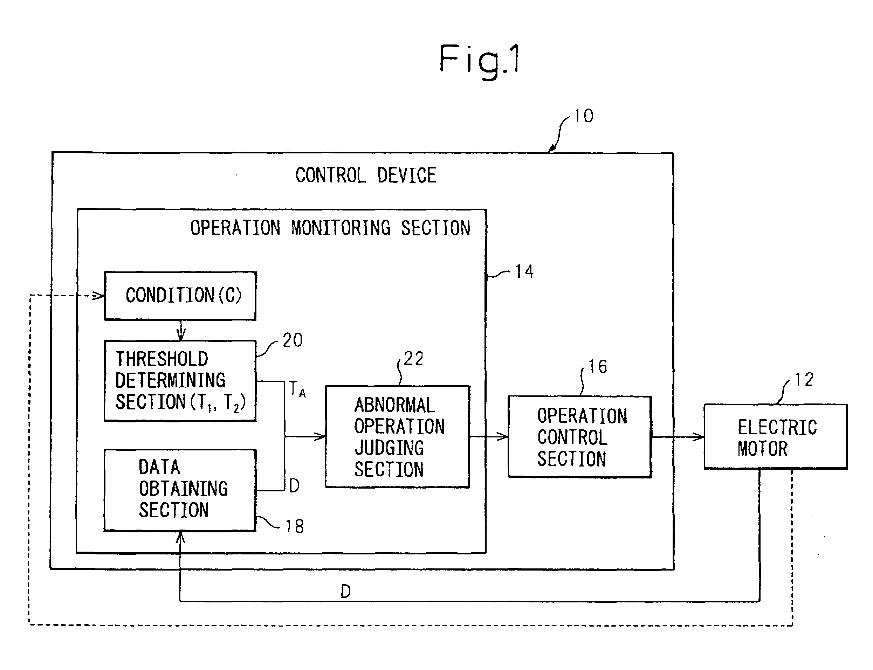

Referring to the drawings, Fig. 1 shows, by a functional block diagram, a basic configuration of a control device 10 for controlling an electric motor, according to the present invention. The control device 10 is typically provided in an automatic control system for a movable structure such as a robot, a machine-tool or the like (not shown), and is configured to control an electric motor 12 used as a driving source of a moving part such as a robot arm, a tool or the like. Further, the control device 10 can be functionally incorporated into a controller, such as a robot controller, a numerical control (NC) apparatus or the like, which is previously provided for the movable structure using the electric motor 12 as the driving source of the moving part.

The control device 10 includes an operation monitoring section 14 for monitoring the operating state of the electric motor 12, and an operation control section 16 for controlling the operation of the electric motor 12 in accordance with a monitored result of the operation monitoring section 14. The operation monitoring section 14 includes a data obtaining section 18 for obtaining operational data D of the electric motor 12; a threshold determining section 20 for selecting and determining an applicable threshold TA actually comparable with the operational data D, from among mutually different first and second thresholds T1 and T2 provided for comparison with the operational data D, in a manner so as to comply with a given condition C in connection with a temperature of the electric motor 12; and an abnormal-operation judging section 22 for comparing the operational data D obtained in the data obtaining section 18 with the applicable threshold TA determined in the threshold determining section 20, and judging whether an abnormality arises in the operation of the electric motor 12. The operation control section 16 is configured to control the operation of the electric motor 12 in accordance with a judged result of the abnormal-operation judging section 22.

According to the control device 10 configured as described above, when an abnormal load is applied to the electric motor 12, in a movable structure such as a robot, machine tool or the like (not shown) using the electric motor 12 as the driving source for the moving part, as the result of a collision of the moving part (i.e., the driven object of the electric motor 12) such as the robot arm, the tool or the like, with an obstacle (not shown) or the failure of a reduction gear mechanism (not shown) of the electric motor 12, the abnormal-operation judging section 22 of the operation monitoring section 14 compares the real-time operational data D of the electric motor 12 with the applicable threshold TA and determines whether there is an abnormality in the operation of the electric motor 12, so as to immediately detect or determine the cause of the abnormal operation, such as a collision of the moving part, failure of the reduction gear mechanism, etc. Then, in accordance with the judged result of the abnormal-operation judging section 22, the operation control section 16 can allow, when the cause of the abnormal operation is detected, the electric motor 12 to immediately perform an operation as a measure to cope with the situation, such as halting or reversing the operation of the electric motor 12. As a result, it is possible to prevent mechanical components of the movable structure from breaking, along with the electric motor 12 and the obstacle, as well as to prevent the other secondary accidents.

In particular, in the control device 10, the threshold determining section 20 is configured to select and determine the applicable threshold TA from among the first and second thresholds T1 and T2 (for example, T1 < T2) in a manner complying with the condition C in connection with the temperature of the electric motor 12, so that it is possible to take the fact that the viscosity of a lubricating oil changes due to the influence of the temperature of the electric motor 12 into consideration during the operation of the electric motor 12, and thus to selectively use either one of the thresholds to suit the temperature of the electric motor 12, in such a manner that, for example the first threshold T1 is used as the applicable threshold TA for the abnormal operation judgment if the temperature-related condition C is not satisfied, while the second threshold T2 is used as the applicable threshold TA for the abnormal operation judgment if the temperature-related condition C is satisfied. In this connection, it should be noted that the condition C in connection with the temperature of the electric motor 12 involves ambient temperature, taking into consideration the fact that the temperature of the electric motor 12 is affected by ambient temperature.

Therefore, for example, with regard to the lubricating oil supplied to the movable areas of the electric motor 12 and the driven object, if the viscosity of the lubricating oil deteriorates under a relatively high temperature environment, a threshold having a lower value (e.g., T1) can be used and an abnormal-operation judgment criteria can thus be made to be more strict, and if the viscosity of the lubricating oil increases under a relatively low temperature environment, a threshold having a higher value (e.g., T2) can be used and an abnormal-operation judgment criteria can thus be made to be less strict. As a result, according to the control device 10, it is possible to quickly and accurately detect the abnormal operation of the electric motor 12 as a result of a collision of the driven object, the failure of the reduction gear mechanism or the like, without being affected by ambient temperature or the temperature of the electric motor (in particular, without causing a false detection due to the increased viscosity of the lubricating oil), and to allow certain measures to cope with the situation, such as halting or reversing the electric motor 12, taken immediately, so as to ensure safety in an automatic control system.

In the configuration described above, the first and second thresholds T1 and T2 may be provided by, e.g., manually inputting them into the control device 10 by an operator, or storing them in a storage medium so as to be readable by the control device 10. Also, the temperature-related condition C may be given to the control device 10 by inputting by an operator or a reading from a storage medium in a way similar to the above. In these circumstances, the control device 10 may include an input section and a storage section (not shown) for the thresholds T1, T2 and the condition C.

Further, in the configuration described above, the threshold determining section 20 may be configured to select and determine the applicable threshold TA from among three or more mutually different thresholds provided for comparison with the operational data D, in a manner so as to comply with the condition C. In this case, several kinds or levels of temperature-related conditions C are set (e.g., the temperature-related conditions C are respectively set for the different temperatures of the electric motor 12) so as to suitably and selectively use the three or more thresholds. According to this configuration, several divided or different situations of the operation of the electric motor 12 can be prepared, and several applicable thresholds TA optimal for the divided situations can be determined, so that it is possible to accurately detect the abnormal operation of the electric motor 12. In this connection, any of the three or more thresholds correspond to the first and second thresholds T1 and T2, and therefore, the configuration of the control device 10 described above (and the embodiments described later) can be applied to the configuration in which three or more thresholds are provided.

Still further, in the configuration described above, the operational data D obtained in the data obtaining section 18 may be any one, or desired combination, of position deviation data in a feedback control, velocity deviation data in a feedback control, actually measured driving-current data, and estimated disturbance torque, obtained during the operation of the electric motor 12. In this connection, the position deviation data, the velocity deviation data and the driving current data are obtainable as data commonly used in the feedback control of the electric motor 12. On the other hand, as described in JP-B-2665984 and JP-B-2749724, the estimated disturbance torque may be one which is estimated from a torque command value and an actually measured velocity value of the electric motor 12, and a disturbance estimating observer for performing such estimation may be incorporated into the data obtaining section 18. In this connection, the position and velocity deviation data may be obtained on the basis of not only a feedback variable from an output element (such as a shaft) of the electric motor 12, but also a feedback variable from a position/velocity detector additionally provided for a driven object (such as a robot arm) of the electric motor 12. Thus, when the control device 10 is configured to obtain data generally used in a common automatic control system as the operational data D, it is possible to simplify the configuration of the control device 10.

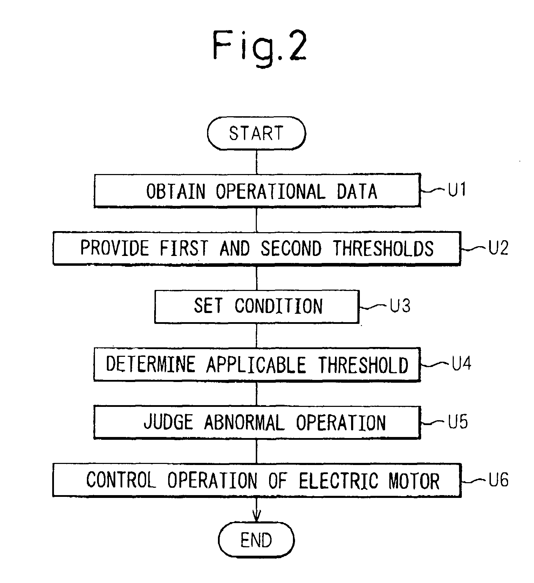

Fig. 2 shows, by a flow chart, a method for controlling an electric motor, according to the present invention. Although this control method can be embodied by only the control device 10 described above, it may include manual operation by an operator in any of several steps. In the following description, components corresponding to those shown in Fig. 1 are designated by like reference numerals, and the detailed descriptions thereof are not repeated hereafter.

The control method according to the present invention has a configuration for monitoring the operating state of the electric motor 12, and controlling the operation of the electric motor 12 in accordance with the monitored operating state. In the first step U1, the operational data D of the electric motor 12 is obtained. In the next step U2, the first and second thresholds T1 and T2 differing from each other are provided for comparison with the operational data D. In the next step U3, the condition C in connection with the temperature of the electric motor 12 is set to be used for selecting the applicable threshold TA actually comparable with the operational data D, from among the first and second thresholds T1 and T2. In the next step U4, the applicable threshold TA is selected and determined from among the first and second thresholds T1 and T2 in a manner as to comply with the condition C. In the next step U5, the operational data D is compared with the applicable threshold TA to judge whether an abnormality arises in the operation of the electric motor 12. In the next step U6, the operation of the electric motor 12 is controlled in accordance with the judged result in step U5, relating to the abnormal operation of the electric motor 12.

The control method configured as described above can also cause the characteristic effects similar to those of the control device 10 described above. Also, in the above configuration, three or more thresholds, differing from each other, may be provided for comparison with the operational data D, so as to allow several applicable thresholds TA to be selected and determined from among three or more thresholds, in a manner so as to comply with several kinds or levels of conditions C.

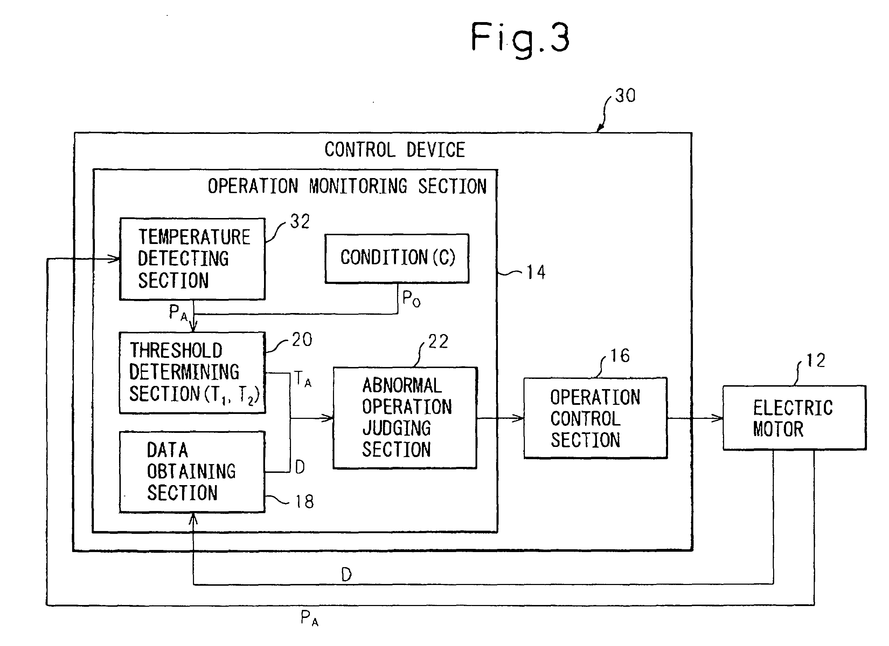

Fig. 3 shows, by a functional block diagram, a configuration of a control device 30 according to a first preferred embodiment of the present invention. The control device 30 has, in addition to the basic configuration of the control device 10 of Fig. 1, a specific configuration in association with the determination of the applicable threshold TA. Therefore, components corresponding to those of the control device 10 are designated by like reference numerals, and the detailed descriptions thereof are not repeated hereafter.

In the control device 30, the operation monitoring section 14 further includes a temperature detecting section 32 for detecting the actual temperature PA of the electric motor 12. The threshold determining section 20 is configured to compare the actual temperature PA detected by the temperature detecting section 32 with a reference temperature P0 of the electric motor 12, which is given as the temperature-related condition C to the threshold determining section 20. The threshold determining section 20 thus determines a lower one of the first and second thresholds T1 and T2 (e.g., T1) as the applicable threshold TA in a case where the actual temperature PA is higher than the reference temperature P0, and determines a higher one of the first and second thresholds T1 and T2 (e.g., T2) as the applicable threshold TA in a case where the actual temperature PA is lower than the reference temperature P0.

In the control device 30 configured as described above, it is possible to selectively use either one of the first and second thresholds T1 and T2 (e.g., T1 < T2), taking into consideration the situation of the actual temperature PA of the electric motor 12 detected by the temperature detecting section 32 when it is compared with the reference temperature P0 of the electric motor 12 given as the condition C. More specifically, if the electric motor 12 is being warmed up due to continuous operation (i.e., the viscosity of the lubricating oil deteriorates), a threshold having a lower value (e.g., T1) can be used and an abnormal-operation judgment criteria can thus be made to be more strict, and if the electric motor 12 is halted and cooled down (i.e., the viscosity of the lubricating oil increases), a threshold having a higher value (e.g., T2) can be used and an abnormal-operation judgment criteria can thus be made to be less strict. As a result, according to the control device 30, it is possible to predict the change in the viscosity of the lubricating oil supplied to the movable areas of the electric motor 12 and the driven object, directly based on the actual temperature PA of the electric motor 12, and thus use the optimal applicable threshold TA for the abnormal operation judgment, so as to further improve the detection accuracy of the abnormal operation of the electric motor 12.

In the configuration described above, the reference temperature P0 of the electric motor 12, given as the condition C, may be set at a suitable value on the basis of the experiment and experience, taking into consideration an attribute such as the material of the lubricating oil actually supplied to the movable areas of the electric motor 12 and the driven object.

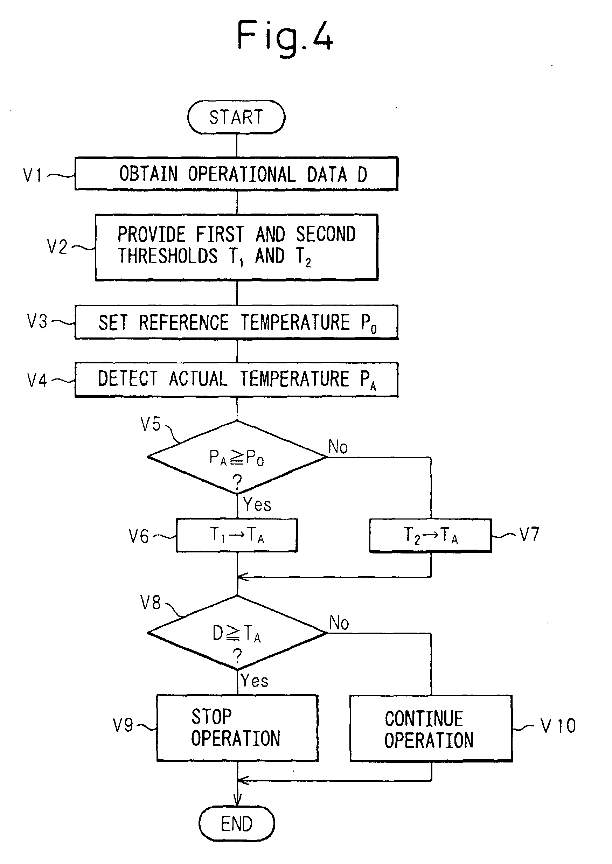

Fig. 4 shows, by a flow chart, a method for controlling an electric motor, according to the first embodiment of the present invention. This control method has a more specific configuration of steps U3 to U6 in the control method of Fig. 2. Although this control method can be embodied by only the control device 30 described above, it may include manual operation by an operator in any of several steps. In the following description, components corresponding to those shown in Fig. 3 are designated by like reference numerals, and the detailed descriptions thereof are not repeated hereafter.

In the control method shown in Fig. 4, in the first step v1, the operational data D of the electric motor 12 is obtained, and in step V2, the first and second thresholds T1 and T2 differing from each other are provided for comparison with the operational data D (in this embodiment, it is assumed that T1 < T2). In the next step V3, the reference temperature P0 of the electric motor 12 is set as the condition C for selecting the applicable threshold TA actually comparable with the operational data D from among the first and second thresholds T1 and T2. In the next step V4, the actual temperature PA of the electric motor 12 is detected. In the next step V5, the actual temperature PA is compared with the reference temperature P0. If the actual temperature PA is higher than (and equal to, in the drawing) the reference temperature P0, the first threshold T1 having the lower value is determined, in step V6, as the applicable threshold TA. On the other hand, if the actual temperature PA is lower than the reference temperature P0, the second threshold T2 having the higher value is determined, in step V7, as the applicable threshold TA.

In the next step V8, the operational data D is compared with the applicable threshold TA determined in steps V6 and V7. If the operational data D is higher than (and equal to, in the drawing) the applicable threshold TA, it is determined that there is an abnormality in the operation of the electric motor 12, and in step V9, the operation of the electric motor 12 is stopped. On the other hand, if the operational data D is lower than the applicable threshold TA, it is determined that the operation of the electric motor 12 is normal, and in step V10, the electric motor 12 is kept continuous. The control method configured as described above can also cause characteristic effects similar to those of the control device 30 described above.

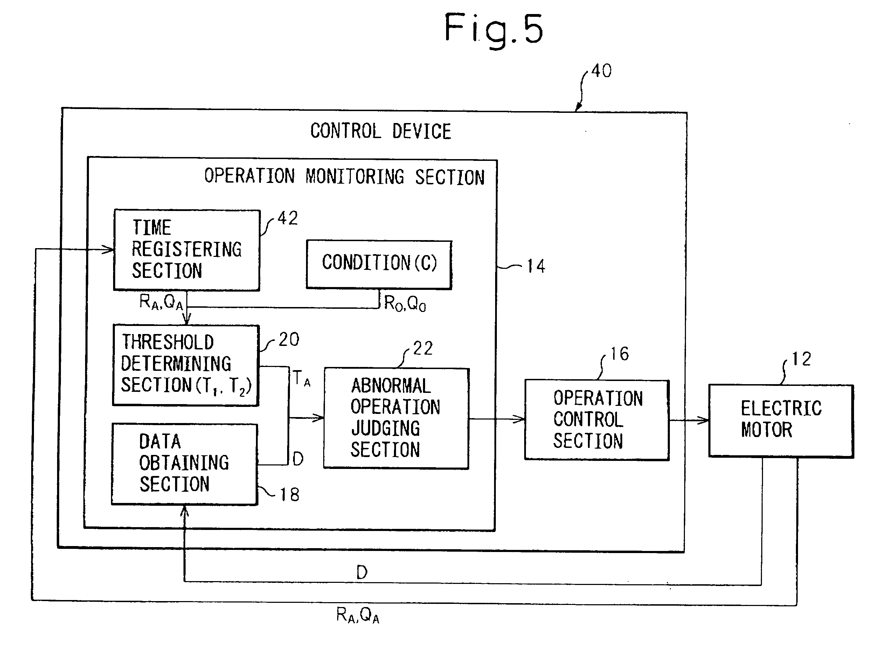

Fig. 5 shows, by a functional block diagram, a configuration of a control device 40 according to a second preferred embodiment of the present invention. The control device 40 has, in addition to the basic configuration of the control device 10 of Fig. 1, a further specific configuration in association with the determination of the applicable threshold TA. Therefore, components corresponding to those of the control device 10 are designated by like reference numerals, and the detailed description thereof is not repeated hereafter.

In the control device 40, the operation monitoring section 14 further comprises a time registering section 42 for measuring the actual resting time RA of the electric motor 12. The threshold determining section 20 is configured to compare the actual resting time RA last measured in the time registering section 42 with a reference resting time R0 of the electric motor 12 given as the temperature-related condition C to the threshold determining section 20. The threshold determining section 20 thus determines a lower one of the first and second thresholds T1 and T2 (e.g., T1) as the applicable threshold TA in a case where the actual resting time RA is shorter than the reference resting time R0.

In this configuration, it is possible to selectively use either one of the first and second thresholds T1 and T2 (e.g., T1 < T2), taking into consideration the situation of the actual resting time RA of the electric motor 12 last measured by the time registering section 42 (i.e., in a period just before or nearest to a measuring time point) when compared with the reference resting time R0 of the electric motor 12 given as the condition C. More specifically, if the last-measured resting time RA of the electric motor 12 is shorter than the reference resting time R0, it is assumed that the electric motor 12 is in a warmed-up state and keeping residual heat resulting from operation before the present resting time (i.e., the viscosity of the lubricating oil deteriorates), a threshold having a lower value (e.g., T1) can be used and an abnormal-operation judgment criteria can thus be made to be more strict. On the other hand, if the last-measured resting time RA of the electric motor 12 is longer than the reference resting time R0, it is assumed that the electric motor 12 is not affected by residual heat resulting from operation before the present resting time. However, a next operation may have started before the time of measuring, and therefore, it is advantageous to determine the threshold while considering the latest situation of the operation.

Thus, in the control device 40, the time registering section 42 is configured to further measure an actual operating time QA of the electric motor 12. In this configuration, if the actual resting time RA is longer than the reference resting time R0 as a result of comparing the last-measured actual resting time RA with the reference resting time R0, the threshold determining section 20 compares the actual operating time QA last measured in the time registering section 42 with a reference operating time Q0 of the electric motor 12 given as the temperature-related condition C. The threshold determining section 20 thus determines a lower one of the first and second thresholds T1 and T2 (e.g., T1) as the applicable threshold TA in a case where the actual operating time QA is longer than the reference operating time Q0, and determines a higher one of the first and second thresholds T1 and T2 (e.g., T2) as the applicable threshold TA in a case where the actual operating time QA is shorter than the reference operating time Q0.

In the above configuration, in the case where the last-measured actual resting time RA of the electric motor 12 is longer than the reference resting time R0, it is possible to selectively use either one of the first and second thresholds T1 and T2 (e.g., T1 < T2), taking into consideration the situation of the actual operating time QA of the electric motor 12 last measured by the time registering section 42 (i.e., in a current period including a measuring time point) when compared with the reference operating time Q0 of the electric motor 12 given as the condition C. More specifically, if the last-measured actual operating time QA of the electric motor 12 is longer than the reference operating time Q0, it is assumed that the electric motor 12 is in a sufficiently warmed-up state (i.e., the viscosity of the lubricating oil deteriorates), a threshold having a lower value (e.g., T1) can be used and an abnormal-operation judgment criteria can thus be made to be more strict. On the other hand, if the last-measured actual operating time QA of the electric motor 12 is shorter than the reference operating time Q0, it is assumed that the electric motor 12 remains in a cooled-down state (i.e., the viscosity of the lubricating oil increases), a threshold having a higher value (e.g., T2) can be used and an abnormal-operation judgment criteria can thus be made to be less strict.

Thus, according to the control device 40, it is possible to predict the change in the viscosity of the lubricating oil supplied to the movable areas of the electric motor 12 and the driven object, indirectly based on the actual resting time RA and the actual operating time QA of the electric motor 12, and thus to use the optimal applicable threshold TA for the abnormal operation judgment, so as to further improve the detection accuracy of the abnormal operation of the electric motor 12. In this regard, the control device 40 may have somewhat less reliable than the above-described control device 30 in which the change in the viscosity of the lubricating oil is directly predicted based on the actual temperature PA of the electric motor 12. However, the control device 40 has an advantage that it does not need to provide an additional component such as a temperature sensor as the temperature detecting section 32, but can use a clock typically provided in a control device as the time registering section 42, and thus can be manufactured at a lower cost than the control device 30.

In the configuration described above, each of the reference resting time R0 and the reference operating time Q0 of the electric motor 12, given as the condition C, may also be set at a suitable time on the basis of the experiment and experience, taking into consideration an attribute such as the material of the lubricating oil supplied to the movable areas of the electric motor 12 and the driven object.

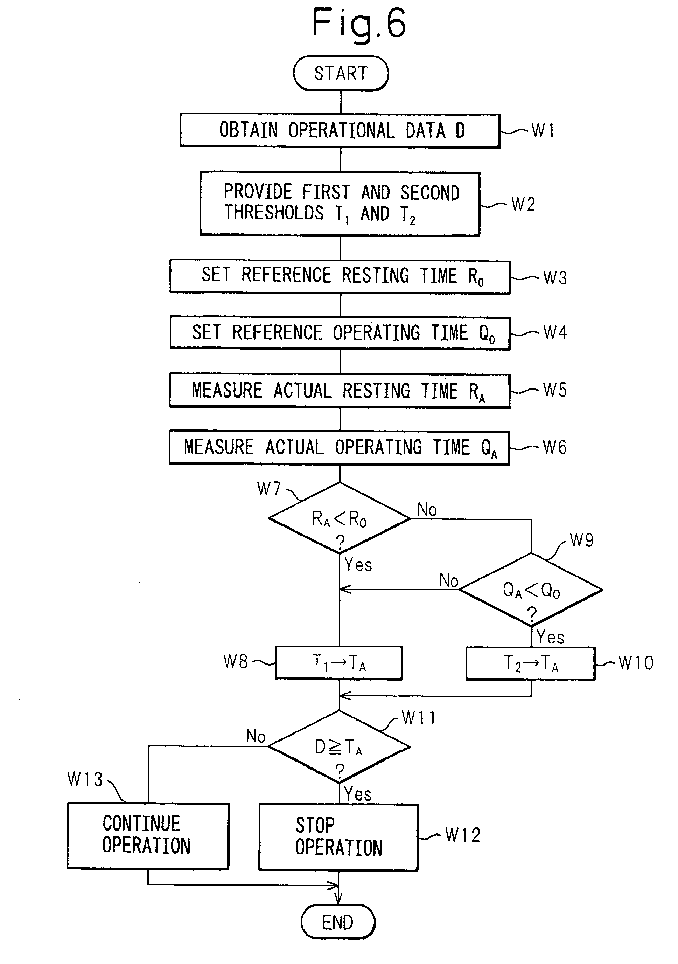

Fig. 6 shows, by a flow chart, a method for controlling an electric motor, according to the second embodiment of the present invention. This control method has a more specific configuration of steps U3 to U6 in the control method of Fig. 2. Though this control method can be embodied by only the control device 40 described above, it may include manual operation by an operator in any of several steps. In the following description, components corresponding to those shown in Fig. 5 are designated by like reference numerals, and the detailed descriptions thereof are not repeated hereafter.

In the control method shown in Fig. 6, in the first step W1, the operational data D of the electric motor 12 is obtained, and in step W2, the first and second thresholds T1 and T2 differing from each other are provided for comparison with the operational data D (in this embodiment, it is assumed that T1 < T2). In the next step W3, the reference resting time R0 of the electric motor 12 is set as the condition C for selecting the applicable threshold TA actually comparable with the operational data D from among the first and second thresholds T1 and T2, and in step W4, the reference operating time Q0 of the electric motor 12 is set. In the next step W5, the actual resting time RA of the electric motor 12 is measured, and in step W6, the actual operating time QA of the electric motor 12 is measured.

In the next step W7, the last-measured actual resting time RA is compared with the reference resting time R0. If the last-measured actual resting time RA is shorter than the reference resting time R0, the first threshold T1 having the lower value is determined, in step W8, as the applicable threshold TA. On the other hand, if the last-measured actual resting time RA is longer than (and equal to, in the drawing) the reference resting time R0, the last-measured actual operating time QA is compared, in step W9, with the reference operating time Q0. Then, if the last-measured actual operating time QA is longer than (and equal to, in the drawing) the reference operating time Q0, the first threshold T1 having the lower value is determined, in step W8, as the applicable threshold TA. On the other hand, if the last-measured actual operating time QA is shorter than the reference operating time Q0, the second threshold T2 having the higher value is determined, in step W10, as the applicable threshold TA.

In the next step W11, the operational data D is compared with the applicable threshold TA determined in steps W8 and W10. If the operational data D is higher than (and equal to, in the drawing) the applicable threshold TA, it is determined that there is an abnormality in the operation of the electric motor 12, and in step W12, the operation of the electric motor 12 is stopped. On the other hand, if the operational data D is lower than the applicable threshold TA, it is determined that the operation of the electric motor 12 is normal, and in step W13, the electric motor 12 is kept continuous. The control method configured as described above can also cause the characteristic effects similar to those of the control device 40 described above.

While the invention has been described with reference to specific preferred embodiments, it will be understood, by those skilled in the art, that various changes and modifications may be made thereto without departing from the scope of the following claims.

## Claims

1. A control device comprising an operation monitoring section (14) for monitoring an operating state of an electric motor (12) and an operation control section (16) for controlling an operation of the electric motor in accordance with a monitored result of the operation monitoring section, **characterized in that**:
said operation monitoring section comprises:
a data obtaining section (18) for obtaining operational data (D) of the electric motor;
a threshold determining section (20) for selecting and determining an applicable threshold (TA) actually comparable with said operational data, from among mutually different first and second thresholds (T1, T2) provided for comparison with said operational data, in a manner as to comply with a given condition (C) in connection with a temperature of the electric motor; and
an abnormal-operation judging section (22) for comparing said operational data obtained in said data obtaining section with said applicable threshold determined in said threshold determining section, and judging whether an abnormality arises in the operation of the electric motor; and that
said operation control section is configured to control the operation of the electric motor in accordance with a judged result of said abnormal-operation judging section.

2. A control device as set forth in claim 1, wherein said operation monitoring section further comprises a temperature detecting section (32) for detecting an actual temperature (PA) of the electric motor; and wherein said threshold determining section is configured to compare said actual temperature detected in said temperature detecting section with a reference temperature (P0) of the electric motor given as said condition to said threshold determining section, determine a lower one of said first and second thresholds as said applicable threshold in a case where said actual temperature is higher than said reference temperature, and determine a higher one of said first and second thresholds as said applicable threshold in a case where said actual temperature is lower than said reference temperature.

3. A control device as set forth in claim 1, wherein said operation monitoring section further comprises a time registering section (42) for measuring an actual resting time (RA) of the electric motor; and wherein said threshold determining section is configured to compare said actual resting time last measured in said time registering section with a reference resting time (R0) of the electric motor given as said condition to said threshold determining section, and determine a lower one of said first and second thresholds as said applicable threshold in a case where said actual resting time is shorter than said reference resting time.

4. A control device as set forth in claim 3, wherein said time registering section is configured to further measure an actual operating time (QA) of the electric motor; and wherein said threshold determining section is configured to compare said actual operating time last measured in said time registering section with a reference operating time (Q0) of the electric motor given as said condition in a case where said actual resting time is longer than said reference resting time, determine a lower one of said first and second thresholds as said applicable threshold in a case where said actual operating time is longer than said reference operating time, and determine said a higher one of said first and second thresholds as said applicable threshold in a case where said actual operating time is shorter than said reference operating time.

5. A control device as set forth in claim 1, wherein said threshold determining section is configured to select and determine said applicable threshold from among three or more mutually different thresholds provided for comparison with said operational data, in a manner as to comply with said condition.

6. A control device as set forth in any one of claims 1 to 5, wherein said operational data obtained in said data obtaining section is selected from a group including a position deviation, a velocity deviation, a driving current and an estimated disturbance torque, obtained during the operation of the electric motor.

7. A method for monitoring an operating state of an electric motor (12) and controlling an operation of the electric motor in accordance with said operating state as monitored, **characterized in that** the method comprises the steps of;
obtaining operational data (D) of the electric motor;
providing mutually different first and second thresholds (T1, T2) for comparison with said operational data;
setting a condition (C) in connection with a temperature of the electric motor, said condition being used for selecting an applicable threshold (TA) actually comparable with said operational data, from among said first and second thresholds;
selecting and determining said applicable threshold from among said first and second thresholds in a manner as to comply with said condition;
comparing said operational data with said applicable threshold and judging whether an abnormality arises in the operation of the electric motor; and
controlling the operation of the electric motor in accordance with a judged result relating to an abnormal operation of the electric motor.

8. A control method as set forth in claim 7, wherein said step of setting a condition comprises the step of setting a reference temperature (P0) of the electric motor as said condition; and wherein said step of selecting and determining said applicable threshold comprises the step of detecting an actual temperature (PA) of the electric motor, comparing said actual temperature with said reference temperature, determining a lower one of said first and second thresholds as said applicable threshold in a case where said actual temperature is higher than said reference temperature, and determining a higher one of said first and second thresholds as said applicable threshold in a case where said actual temperature is lower than said reference temperature.

9. A control method as set forth in claim 7, wherein said step of setting a condition comprises the step of setting a reference resting time (R0) of the electric motor as said condition; and wherein said step of selecting and determining said applicable threshold comprises the step of measuring an actual resting time (RA) of the electric motor, comparing said actual resting time as last measured with said reference resting time, and determining a lower one of said first and second thresholds as said applicable threshold in a case where said actual resting time is shorter than said reference resting time.

10. A control method as set forth in claim 9, wherein said step of setting a condition comprises the step of further setting a reference operating time (Q0) of the electric motor as said condition; and wherein said step of selecting and determining said applicable threshold comprises the step of further measuring an actual operating time (QA) of the electric motor, comparing said actual operating time as last measured with said reference operating time in a case where said actual resting time is longer than said reference resting time, determining a lower one of said first and second thresholds as said applicable threshold in a case where said actual operating time is longer than said reference operating time, and determining a higher one of said first and second thresholds as said applicable threshold in a case where said actual operating time is shorter than said reference operating time.
